Europäisches Patentamt

European Patent Office

Office européen des brevets

(11) Publication number: **0 426 725 B1**

(12) **EUROPEAN PATENT SPECIFICATION**

(45) Date of publication of patent specification: **24.11.93** (51) Int. Cl.5: **F16F 9/34**

(21) Application number: **89908540.1**

(22) Date of filing: **17.07.89**

(86) International application number:
**PCT/SE89/00414**

(87) International publication number:
**WO 90/01125 (08.02.90 90/04)**

(54) **SHOCK ABSORBER.**

(30) Priority: **28.07.88 SE 8802750**

(43) Date of publication of application:
**15.05.91 Bulletin 91/20**

(45) Publication of the grant of the patent:
**24.11.93 Bulletin 93/47**

(84) Designated Contracting States:
**DE FR IT NL**

(56) References cited:
**US-A- 3 127 958**
**US-A- 3 507 366**
**US-A- 3 635 071**

(73) Proprietor: **OHLINS RACING AB**
**Kanalvagen 3B P.O. Box 722**
**S-194 27 Upplands Vasby(SE)**

(72) Inventor: **MALM, Tommy**
**Solstigen 4**
**S-562 00 Norrahammar(SE)**

(74) Representative: **Karlsson, Berne**
**Box 2078**
**S-137 02 Västerhaninge (SE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.10/3.6/3.3.1)

# Description

The present invention relates to a shock absorber for objects, for example wheels, and operating with a damping function which can be varied by means of a member which determines the size of a media passage between top and bottom sides of a piston belonging to the absorber.

Shock absorbers with controllable damping forces are previously known. A regulating function can be included in order to make the adjustment independent of the piston speed in the shock absorber. Swedish patent application 8800602-8 (published after the priority date of the present application) describes the use of a proportional magnet in such a regulating function.

With shock absorbers it is very often difficult to obtain an appropriate damping function in all damping instances. In the case of shock absorbers with a controlled and self-regulating function there remain damping instances in which the set desired damping forces are difficult for the shock absorber to maintain. An example of this is the case where powerful accelerations occur in the compression direction of the shock absorber. The regulating function is impaired and the damping force effected by the absorber becomes great, resulting in the shock absorber functioning as a rigid suspension point for the object/wheel. In vehicles for example, the above means that there are considerable difficulties in obtaining an appropriate damping force when the wheel strikes against obstacles (for example stones, railway tracks, etc) protruding from the roadway.

The object of the present invention is to provide a shock absorber which results in a solution to this problem, inter alia. The feature which may principally be regarded as characterizing the new shock absorber is that the member is designed, by means of the inertia of its mass and/or the inertia of a body connected to the member, to execute a relative displacement movement in its bearing when acceleration force(s) acting on the mass occur(s) on account of acceleration(s) in the object, and that, by means of the said displacement movement(s), the member affects the size of the media passage.

In one embodiment each displacement movement takes place upon the action of a resistance force or regulating force which, when the acceleration force ceases, imparts to the member, in its bearing, a relative return movement which results in the actuation of the member by means of mass inertia ceasing.

The invention has special advantages when the acceleration takes place in the compression direction of the absorber, and the said effect on the damping force can consist in a significant reduction of the latter. The said effect on the size of the media passage can thus consist in the passage (a restriction), for example at the said seat, increasing substantially and momentarily. The effect is controlled or guided.

In one embodiment the member consists of an armature included in a proportional magnet, where the modulation force of the magnet can be set by electrical control signals, and the armature is longitudinally displaceable upon the action of the modulation force/regulating force in order to permit, in the regulating function for the damping forces generated by the absorber, positional displacement relative to a seat which is included in the media passage and through which a media flow dependent on the damping force can pass. In this connection the armature can be provided with or control a needle provided with an end area, in which respect the quotient between the modulation force and the needle area determines the magnitude of a first pressure which all the time balances out a pilot flow, included in the regulating function and passing the said seat, as long as the acceleration does not occur. The said first pressure can be used in a servo-function effected by a longitudinally displaceable member/slide, in which respect the first pressure acts on the first end of the member/slide, and a second pressure, originating from the pressure difference between top and bottom sides of a piston belonging to the absorber, acts on the other end of the member/slide. The said longitudinally displaceable member/slide can thereby control the main media flow via a restriction. By means of the inertia in the member/armature, this causes a reduction in the first pressure, resulting in the longitudinally displaceable member/slide increasing the passage for the main media flow considerably and in a controlled fashion. When the acceleration ceases, the armature/needle returns to its position set by the regulating function, resulting in a restoration of the first pressure.

In a further embodiment of the invention, the member is connected to or comprises a body longitudinally displaceably mounted in and relative to the piston, where it is allocated an initial position by means of one or more return members, which can be made up of one or more springs.

By means of what is proposed, the shock absorber can be used optimally in a simple manner so as to deal with especially powerful accelerations occurring in the compression direction. When driving over stones and other objects protruding from the roadway, the running characteristics of the vehicle are significantly improved.

An at present proposed embodiment of an arrangement which exhibits the significant characteristics of the invention will be described below with reference to the attached drawings in which

Figure 1   shows, in a vertical view and partial cutaway, the attachment of a shock absorber in a vehicle chassis and in a wheel suspension bracket with associated wheel,

Figure 2a   shows, in a vertical view and cutaway, parts of the shock absorber according to Figure 1 during a first driving condition of the vehicle,

Figure 2b   shows, in a vertical view and cutaway, corresponding parts as in Figure 2a, but in another driving condition,

Figure 3   shows, in diagrammatic form, a force/time curve for the damping function of the shock absorber, and

Figure 4   shows, in vertical section, a second exemplary embodiment of how to control damping force variations by means of the inertia of a mass.

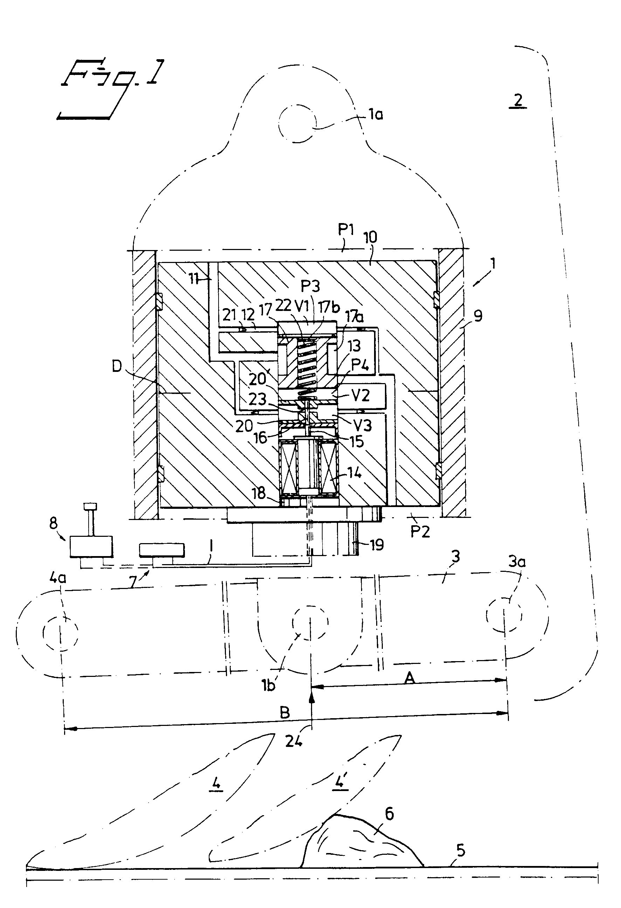

Figure 1 shows those parts of a shock absorber 1 which are most important for the invention. A chassis is symbolized by 2 and, at its upper part, the shock absorber is mounted in the chassis in a bearing 1a. The chassis also bears a suspension bracket 3 for a wheel 4. The bearing point of the bracket in the chassis is shown by 3a. At the bottom the shock absorber is mounted in the suspension bracket at a bearing point 1b. The bearing point of the wheel in the bracket is shown by 4a. A drive surface is indicated by 5, and an obstacle, protruding from the surface 5, is shown by 6. The wheel 4 is shown in two positions 4 and 4', the last-mentioned position 4' corresponding to the case in which the wheel strikes against the protruding obstacle 6 (stone, railway track, etc).

The shock absorber shown in the exemplary embodiment is of the type which can be controlled by means of control signals from one or more external control units 7,8 etc. The control is effected by electrical means. By means of the control it is possible to set different damping forces which the shock absorber is to be able to effect. The shock absorber comprises a cylinder 9 and a piston 10 operating in the latter. The basic design of the shock absorber can be of the type which is stated in international patent application PCT/SE85/00120(WO 85/04698). The piston in such a shock absorber has one or more through-channels 11 for the main media flow. Moreover, channels 12 are included for a pilot flow. In the piston the main media flow passes a restriction 13 which can be acted on by means of the said control signals I. The actuation is effected by means of a proportional magnet 14 whose armature 15 forms or is connected to a needle-shaped unit 16. The proportional magnet comprises, in a manner known per se, a winding, bobbin, etc. The shock absorber shown also operates with servo-function for actuation of the main media flow. This servo-function includes a longitudinally displaceable slide 17 which, together with the proportional magnet, is arranged in a space 18 in the piston. The proportional magnet is connected to the external control units via electrical leads which are arranged in a channel in the piston stem 19 of the piston 10. The piston is sealed off in known manner against the inner surface of the cylinder 9 with seals. The pressure above the piston is indicated by P1 and the pressure below the piston is indicated by P2. The channels for the main media flow are shown with a greater diameter than the channels for the pilot media flows. Also, for the sake of clarity, the channels are shown in one and the same plane. In the exemplary embodiment the channels are distributed around the periphery in a suitable manner. The piston 10 consists of two or more parts which are joined together via a dividing line D, which is only symbolically indicated on account of the manner in which the channels have been illustrated.

Two fixed intermediate walls 20 and 20' are arranged in the space 18. Three different volumes are formed in this way. A variable first volume V1 is arranged between the upper end surface of the recess 18 and the top surface of the slide 17. A second variable volume V2 is formed between the underside of the slide 17 and the intermediate wall 20'. A fixed third volume V3 is formed between the intermediate walls 20 and 20'. The slide is provided with a side recess 17a to which the main media channel 11 is connected and at which the restriction 13 is arranged. Two pilot media channels are connected to the space V1, and two pilot media channels are connected to the volume V3. Nonreturn valves or one-way valves 21 are arranged in each pilot media channel. The slide 17 is designed with a spring 22 which bears at its one end against a surface of the intermediate wall 20' and, at its other end bears against an inner surface in the slide 17. The said inner surface is located in an insertion hole for the spring 22 in the slide 17.

The needle 16 is mounted in an associated recess in the wall 20, and the needle 16 extends forwards towards a seat 23 formed in the wall 20'. The needle and the seat form a restrictable passage between the spaces V2 and V3. At its upper end the slide is provided with a recess 17b and, via this recess 17b and the insertion hole for the spring 22, there is a connection between the spaces V1 and V2. In the space V1 there exists a pressure P3 which is dependent on the pressure difference between the pressures at the top and bottom sides of the piston. By means of the recess 17b and the insertion hole for the spring 22 a pilot flow is formed via the space V2, the seat 23 and the space V3. The pilot media channels are four in number and cooperate in pairs. When the pressure P1 exceeds the pressure P2, the pilot flow is formed via the first pair of pilot media channels and, when the pressure condition between the top and bottom sides of the piston is reversed, the second pair of pilot media channels is connected in order to form the pilot flow. Hydraulic oil can be used as the media.

The proportional magnet is characterized in that its armature 15 can be modulated by means of the control signal I and in that the armature is longitudinally displaceable upon the action of the modulation force of the proportional magnet. The function is thus as follows. During on-going regulating function, a pressure P4 is determined in the space V2 by the quotient between the modulation force of the proportional magnet and the area (needle area) of the unit 16 (= armature and needle). The unit 16 executes the longitudinal displacement movement towards or from the sheat 23 as a function of changes in the pressure P4. The last-mentioned pressure can indeed vary as a result of variations in the piston speed, which variations give various differences in the pressure P3. Since, as a result of this, the pressure P4 tends to increase or decrease, the armature/needle can move in the direction from or towards the seat 23, so that the pressure P4 all the time assumes its value corresponding to the control signal. Thus, the pilot flow through the seat 23 is all the time balanced out by the pressure P4 in the space V2. The unit 16 (armature/needle) stands (or rides) in the pilot flow at the seat and is pressed towards the pilot flow by the modulation force. Variations in the piston speed are prevented in this way from affecting the damping functions in an undesired manner. The regulating functions can be arranged so that the damping functions are independent of parameters in question over the whole regulating range or, alternatively, are dependent in a predetermined manner within the regulating range.

An altered control signal, i.e. another value of the control signal I, causes a corresponding alteration in the said quotient. The pressure P4 assumes a new value corresponding to the alteration which value is thereafter maintained or altered in a predetermined manner within the whole regulating range independently of variations in actual shock absorber parameters (piston speed) etc.

The pressure P4 is also used for a servo-function effected by the slide 17. The position of the slide 17 is determined by the pressures P3 and P4, in which respect the pressure P3 is determined by the pressure difference existing between the top and bottom sides of the piston, i.e. by P1-P2 or P2-P1, and the pressure P4 can be set in accordance with the above. The restriction 13 of the main media is dependent on the position of the slide determined by the said pressures P3 and P4.

A change in the piston speed, for example, results in tendencies towards a change in the pressure difference between the top and bottom sides of the piston and, thus, the pressure P3. The self-regulating function of the slide 17 results in the size of the restriction being changed by displacement of the slide. The change in the size of the restriction means that the tendencies towards a change in the pressure difference between the top and bottom sides of the piston is counteracted and the pressure P3 is maintained at its assumed valve. The said displacement of the slide in the regulating function for the main media causes tendencies towards a change in the set pressure P4 in the space V2. The last-mentioned tendencies are counteracted in turn in the abovementioned manner, etc.

Thus, the regulating function in the shock absorber shown comprises two interacting regulating systems, a system which can be actuated by the controls for the said pilot flow, and a self-regulating system for the main media flow.

The total regulating function described above or the regulating system functions under normal conditions, for example in vehicles during normal running conditions. However, when powerful accelerations occur in the shock absorber in the compression direction thereof, see the direction of arrow 24, the regulating function or regulating functions do not cope, but the slide 17 blocks the channel 11 for the main media flow. The damping force from the shock absorber is maximal, and the suspension point in question acts as a rigid suspension point.

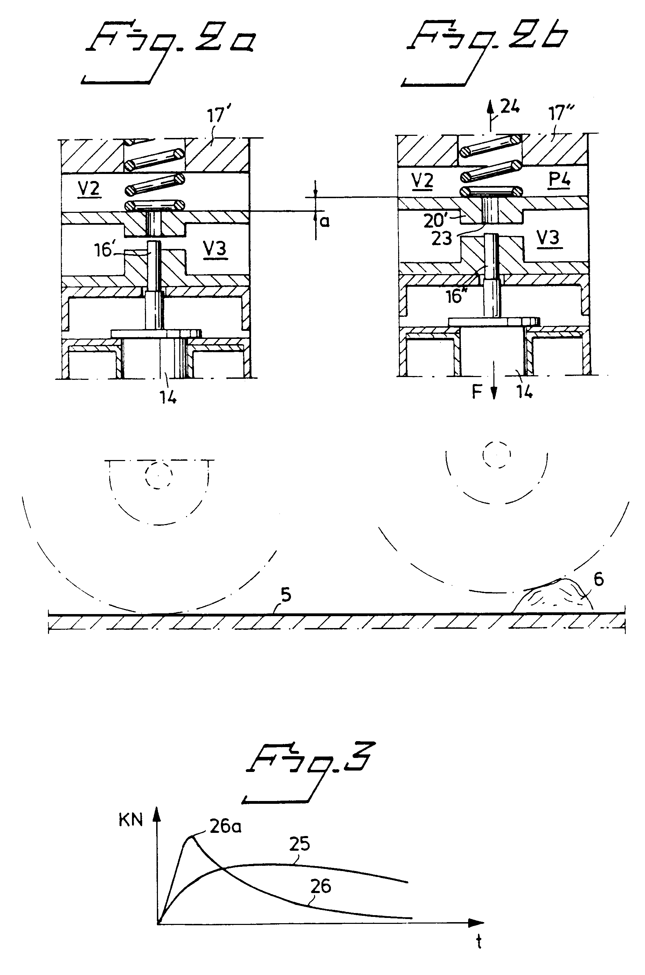

According to the invention the problem is solved by using the inertia in the mass of the needle/armature. The needle/armature is arranged so that its movement is actuable by the acceleration force F occurring in the unit 16, in which respect the effect is used to reduce the restriction. The reduction takes place as a function of the said inertia/acceleration and can be carried out quickly and instantly, and can last, for example, as long as the powerful acceleration is present. By means of the severe reduction in the restriction 23, the pressure P4 in the space V2 falls dramatically, with the result that the slide 17 can move towards the intermediate wall 20' (see Figure 1). This means that the previously blocked main media passage 11 is opened completely or partially. A correspondingly instant reduction is thus obtained by the damping force effected by the shock absorber. In the function, the inertia of or the acceleration force on the slide 17 can also be used to produce the change in the damping force not determined by the regulating function of the shock absorber. When driving over the protruding object 6 on the roadway 5, there is a positional change, or tendency towards a positional change, of the shock absorber housing and also of the seat 23. This positional change has been indicated in Figures 2a and 2b by a. The said figures also show the effect of the acceleration force F on the unit 16 moving to an altered position not determined by the regulating function. The position of the unit as determined by the regulating function is shown in Figure 2a by 16', while the position not determined by the regulating function is shown by 16''. In a corresponding manner, the positions for the slide are indicated by 17' and 17''. The relative displacement between the seat (in the wall 20') and the unit 16 takes place upon the action of the modulation force of the proportional magnet 14. When the acceleration ceases, i.e. when the force F ceases, the armature/needle is returned to the position determined by the regulating function, according to Figure 2a etc.

The change, not determined by the regulating function, in the damping force of the shock absorber is chosen as a function of the mass of the armature/needle and of the distance A and/or B (see Fig. 1) between the bearing points for the bracket 3 and the shock absorber 1, and the bracket 3 and the wheel 4. By means of the bracket, and the coupling of the shock absorber on the latter, the movement of the shock absorber is reduced in relation to the movement of the wheel, and the degree of reduction affects the acceleration.

The following relations apply at each moment in time,

$$F_{tot} = F_{reg} - (k \times F_{acc}),$$

where, $F_{tot}$ = the total (resulting) force which acts on the needle/armature.

$F_{reg}$ = the force generated by the regulating function.

k = built-in constant in the construction (exchange = distance A/distance B (Fig. 1)).

$F_{acc}$ = the acceleration force = mass x acceleration x exchange/increase (for example, said needle area/area of end face of slide 17 facing towards the space V2).

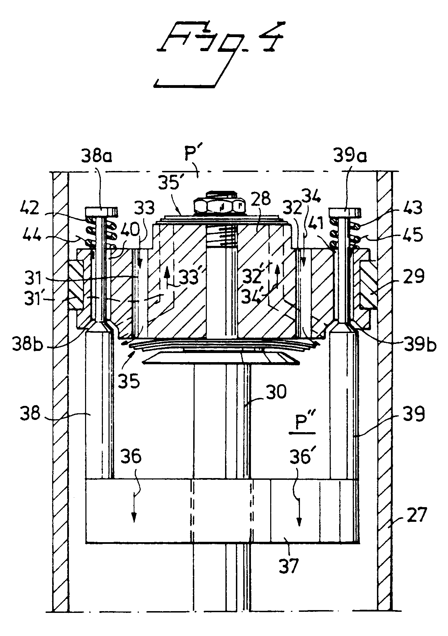

Figure 3 shows the force/time curves for the invention with 25 and without the invention with 26. The curve 25 shows that the shock absorber force initially rises in a curve from the zero value to an essentially horizontal curve for the maximum value of the damping force, and thereafter slowly falls with time. The curve 26 initially contains a strong peak 26a with a high damping force value, from which the curve falls relatively quickly. The disadvantage of the said initial peak value can be eliminated by means of the invention.

In Figure 4 a shock absorber cylinder 27 is partially shown with associated piston 28, which is sealed off against the inside of the cylinder with a sealing ring 29. The stem of the piston is indicated by 30. The piston is provided with first through-passages 31 and 32. In the function case shown, the pressure P' at the top side of the piston exceeds the pressure P'' at the underside of the piston, resulting in the media, for example hydraulic oil, flowing in the direction of the arrows 33, 34 from the top side to the bottom side. The size of the media flows 33, 34 is determined by flow-size-determining members (shim plates) 35 of known type, which can bend down as a function of the magnitude of the pressure difference P'-P''.

The piston also bears a member which is actuable by acceleration forces 36, 36' and which comprises a body 37 mounted via two or more elements 38, 39 in the piston 28. Each element extends through a hole 40, 41 passing through the piston and is designed, at the top side of the piston, with widened parts 38a, 39a and, at the bottom side of the piston, with seat parts 38b and 39b respectively. The resistance members or springs 42 and 43 respectively hold the member 37, 38, 39 in an initial position which is present as long as no acceleration forces act on the mass of the member. Other media passages, which are formed between the outsides of the elements 38 and 39 and the insides of the holes 40 and 41, are closed in the initial position (or, alternatively, opened to a pre-determined extent). When acceleration forces act on the mass of the member ( = the function state in Fig.4), the member is longitudinally displaced in its bearing in the piston, and the passages at the seats 38b, 39b are opened (changed/increased). Other media passages 44, 45 are formed (changed/increased) between the top and bottom sides of the piston. When the acceleration forces cease, the member 37, 38, 39 is restored (longitudinally displaced backwards) by the springs 41, 42, etc. The shock absorber is also equipped with a second set of flow-size-determining members (shim plates) 35' which control the flow 33', 34' in two or more additional passages 31', 32' passing through the piston 28 when the pressure P'' exceeds the pressure P'. The control is effected as a function of the pressure difference P''-P'. This pressure difference case or this damping direction can also be allocated a mass or body (not shown) which corresponds to the mass or body 37 and which is then mounted in the piston 28 in a corresponding manner with elements and springs which correspond to the elements 38, 39 and the springs 42, 43.

The expression - instant effect - according to the above refers to a quickly passing effect, which is fully controlled or guided in the effected damping force actuation function. The latter can, for example, be connected for 1-10 % of the total damping effect time. The flow-size-determining member or the body must have a mass actuable by the acceleration which assumes values of a sufficient number of grams and upwards. Members and bodies with too small a mass (for example parts of 1 gram) cannot be used or are not suitable in this connection.

The invention is not limited to the embodiment described above as an example, but can undergo modifications within the scope of the subsequent patent claims and the inventive concept.

**Claims**

1. Shock absorber (1) for objects, for example a wheel (4), and operating with a damping function which can be varied by means of a member (15,37) which determines the size of a media passage (11,40,41) between top and bottom sides of a piston (10,28) belonging to the absorber (1), characterized in that the member (15,37) is designed in order, by means of the inertia of a mass and/or the inertia of a body connected (16,37,38) to the member (15,37), to execute a relative displacement movement in its bearing when acceleration force acting on the mass occurs on account of acceleration in the object (4), and in that the member (15,37), by means of the said displacement movement, affects the size of the media passage (11,40,41).

2. Shock absorber according to patent claim 1, characterized in that the displacement movement(s) take(s) place upon the action of a resistance force or regulating force which, when the acceleration force ceases, imparts to the member (15), in its bearing, a relative return movement which results in the actuation of the member (15) by means of its mass inertia ceasing.

3. Shock absorber according to patent claim 1 or 2, characterized in that the member consists of an armature (15) included in a proportional magnet (14), where the modulation force of the magnet can be set by electrical control signals (I), and the armature (15) is longitudinally displaceable upon the action of the modulation force/regulating force in order to permit, in the regulating function for the damping forces effected by the absorber, positional displacement relative to a seat (23) which is included in the media passage and through which a media flow dependent on the damping forces can pass.

4. Shock absorber according to patent claim 1, 2 or 3, characterized in that the said acceleration takes place in the compression direction (24) of the absorber and in that the said effect on the damping force consists in a significant reduction of the latter.

5. Shock absorber according to patent claim 1 or 2, characterized in that the said effect is achieved by means of the passage (a restriction) at the said seat (23) increasing as a function of the said acceleration.

6. Shock absorber according to one of patent claims 3, 4 and 5, characterized in that the armature (15) is provided with or controls a needle (16) provided with an end area, and in that the quotient between the modulation force and the needle area determines the magnitude of a first pressure (P4) which all the time balances out a pilot flow, included in the regulating function and passing the said seat (23), as long as acceleration does not occur.

7. Shock absorber according to patent claim 6, characterized in that the said first pressure (P4) is also used in a servo-function effected by a longitudinally displaceable member/slide (17), in which respect the first pressure (P4) acts on the first end of the member/slide, and a second pressure (P3), originating from the pressure difference (P1-P2, P2-P1) between top and bottom sides of a piston belonging to the absorber, acts on the other end of the member/slide, and in addition the longitudinally displaceable member/slide (17) controls the main media flow via a restriction (13).

8. Shock absorber according to patent claim 7, characterized in that the said effect causes a reduction in the first pressure, resulting in the longitudinally displaceable member/slide significantly increasing the passage (13) for the main media flow.

9. Shock absorber according to patent claim 7 or 8, characterized in that, when the acceleration ceases, the armature/needle returns to its position set by the regulating function, resulting in a restoration of the first pressure (P4).

10. Shock absorber according to patent claim 1, characterized in that the member (37) is connected to or comprises a body (38,39) longitudinally displaceably mounted in and relative to the piston (28), where it is allocated an initial position by means of one or more return members, for example in the form of one or more springs (42,43).

**Patentansprüche**

1. Stoßdämpfer (1) für Gegenstände, zum Beispiel für ein Rad (4), dessen Dämpfungsfunktion über einen Regelstab (15,37), der die Größe des Durchflußraums für ein Medium (11, 40, 41) von der Ober- zur Unterseite eines zum Stoßdämpfer (1) gehörigen Kolbens (10, 28) bestimmt, variiert werden kann, dadurch gekennzeichnet, daß die Konstruktion des Regelstabes (15, 37) durch die Trägheit einer Masse oder eines mit dem Regelstab (15, 37) verbundenen Körpers (16, 37, 38) eine relative Verschiebung in dessen Lagerung bewirkt, wenn auf die Masse eine Beschleunigungskraft aufgrund einer Beschleunigung des Gegenstandes (4) einwirkt, sowie dadurch gekennzeichnet, daß der Regelstab (15, 37) durch die besagte Verschiebung die Größe des Mediendurchflußraumes (11, 40, 41) beeinflußt.

2. Stoßdämpfer gemäß Patentanspruch 1, dadurch gekennzeichnet, daß die Verschiebung(en) durch die Einwirkung einer Widerstandskratt oder Regelkraft stattfindet/stattfinden, die eine relative Rückkehrbewegung des Regelstabes (15) in seiner Lagerung auslöst, wenn die Beschleunigungskraft nicht mehr anliegt, wodurch der Regelstab (15) bei Wegfall seiner Massenträgheit betätigt wird.

3. Stoßdämpfer gemäß Patentanspruch 1 oder 2, dadurch gekennzeichnet, daß der Regelstab aus einem Anker (15), umgeben von einem Proportionalmagneten (14), besteht, wobei die Modulationskraft des Magneten durch elektrische Steuersignale (I) eingestellt werden kann, und der Anker (15) bei Einwirkung der Modulationskraft/ Regelkraft in Längsrichtung verschiebbar ist, so daß zur Regulierung der vom Stoßdämpfer bewirkten Dämpfungskräfte eine Positionsverschiebung gegenüber einem Sitz (23) erfolgen kann, der sich im Mediendurchflußraum befindet und durch den ein Mediendurchfluß abhängig von den Dämpfungskräften stattfinden kann.

4. Stoßdämpfer gemäß Patentanspruch 1, 2 oder 3, dadurch gekennzeichnet, daß die besagte Beschleunigung in der Kompressionsrichtung (24) des Stoßdämpfers auftritt, sowie dadurch gekennzeichnet, daß die besagte Wirkung auf die Dämpfungskraft in einer deutlichen Reduzierung dieser Kraft besteht.

5. Stoßdämpfer gemäß Patentanspruch 1 oder 2, dadurch gekennzeichnet, daß die besagte Wirkung durch den Durchflußraum (eine Begrenzung) am Sitz (23) erreicht wird, die sich als Funktion der Beschleunigung vergrößert.

6. Stoßdämpfer gemäß einem der Patentansprüche 3, 4 und 5, dadurch gekennzeichnet, daß der Anker (15) mit einer Nadel mit Endfläche (16) versehen ist oder diese steuert, sowie dadurch gekennzeichnet, daß der Quotient aus der Modulationskraft und der Nadelfläche die Größe des Grunddrucks (P4) bestimmt, der ständig einen zur Regelfunktion gehörigen und den Sitz (23) passierenden Pilotdurchfluß ausgleicht, solange keine Beschleunigung auftritt.

7. Stoßdämpfer gemäß Patentanspruch 6, dadurch gekennzeichnet, daß der Grunddruck (P4) auch in einer Servo-Funktion Anwendung findet, die durch einen in Längsrichtung beweglichen Regelstab/Schieber (17) bewirkt wird, wobei der Grunddruck (P4) auf das eine Ende des Regelstabs/Schiebers wirkt und ein zweiter Druck (P3), der sich aus dem Druckgefälle (P1-P2, P2-P1) zwischen der Ober- und der Unterseite des zum Stoßdämpfer gehörigen Kolbens ergibt, auf die andere Seite des Regelstabs/ Schiebers wirkt. Zusätzlich steuert der in Längsrichtung bewegliche Regelstab/Schieber (17) den Haupt-Mediendurchfluß über eine Begrenzung (13).

8. Stoßdämpfer gemäß Patentanspruch 7, dadurch gekennzeichnet, daß der besagte Effekt eine Reduzierung des Grunddrucks bewirkt, wodurch der in Längsrichtung bewegliche Regelstab/Schieber den Durchflußraum (13) für den Haupt-Mediendurchfluß deutlich erhöht.

9. Stoßdämpfer gemäß Patentanspruch 7 oder 8, dadurch gekennzeichnet, daß der Anker/die Nadel zu der über die Regelfunktion eingestellten Position zurückkehrt, wenn die Beschleunigung aufhört, so daß der Grunddruck wiederhergestellt wird.

10. Stoßdämpfer gemäß Patentanspruch 1, dadurch gekennzeichnet, daß der Regelstab (37) mit einem Körper (38, 39) verbunden ist oder ein solcher Körper ist, der in Längsrichtung beweglich im Kolben und relativ zum Kolben (28) montiert ist, wobei ihm mittels einem oder mehrer Rücksetzglieder, zum Beispiel in Form von einer oder mehreren Federn (42, 43) eine Anfangsposition zugewiesen wird.

## Revendications

1. Amortisseur (1) destiné à des objets tels qu'une roue (4) et travaillant avec une fonction d'amortissement qui peut être modifiée à l'aide d'un organe (15, 37) qui détermine la taille d'un passage de fluide (10, 40, 41) entre des faces supérieure et inférieure d'un piston (10, 28) appartenant à l'amortisseur (1), caractérisé en ce que l'organe (15, 37) est réalisé afin que, grâce à l'inertie d'une masse et/ou l'inertie d'un corps (16, 37, 38) qui est raccordé à l'organe (15, 37), il exécute un mouvement de déplacement relatif dans son support lorsqu'une force d'accélération agissant sur la masse est produite par l'accélération de l'objet (4), et en ce que l'organe (15, 37) affecte la dimension du passage de fluide (11, 40, 41) par le mouvement de déplacement.

2. Amortisseur selon la revendication 1, caractérisé en ce que le mouvement ou les mouvements de déplacement sont réalisés sous l'action d'une force de résistance ou de régulation qui, lorsque la force d'accélération cesse, provoque un déplacement relatif de retour de l'organe (15) dans son support, ce déplacement provoquant la commande de l'organe (15) par cessation de l'inertie de la masse.

3. Amortisseur selon la revendication 1 ou 2, caractérisé en ce que l'organe est constitué d'une armature (15) incorporée à un aimant proportionnel (14), la force de modulation de l'aimant pouvant être réglée par des signaux électriques de commande (I), et l'armature (15) est mobile longitudinalement sous l'action de la force de modulation/force de régulation afin qu'un déplacement de position par rapport à un siège (23) soit possible pendant la fonction de régulation des forces d'amortissement réalisée par l'amortisseur, le siège étant incorporé au passage de fluide et le courant de fluide pouvant passer dans le siège en fonction des forces d'amortissement.

4. Amortisseur selon la revendication 1, 2 ou 3, caractérisé en ce que l'accélération s'effectue dans le sens de la compression (24) de l'amortisseur, et en ce que ledit effet sur la force d'amortissement est une réduction notable de celle-ci.

5. Amortisseur selon la revendication 1 ou 2, caractérisé en ce que ledit effet est obtenu par augmentation du passage (rétrécissement) formé par le siège (23) en fonction de l'accélération.

6. Amortisseur selon l'une des revendications 3, 4 et 5, caractérisé en ce que l'armature (15) comporte un pointeau (16) ou commande un tel pointeau qui a une surface d'extrémité, et en ce que le quotient de la force de modulation et de la section du pointeau détermine l'amplitude d'une première pression (P4) qui équilibre tout le temps un courant pilote, inclus dans la fonction de régulation et passant au niveau du siège (23), tant que l'accélération n'apparaît pas.

7. Amortisseur selon la revendication 6, caractérisé en ce que la première pression (P4) est aussi utilisée dans une fonction d'asservissement remplie par un organe coulissant (17) mobile longitudinalement, la première pression (P4) agissant alors à la première extrémité de l'organe coulissant, et une seconde pression (P3) due à la différence de pression (P1 - P2, P2 - P1) existant entre les faces supérieure et inférieure d'un piston appartenant à l'amortisseur, agit sur l'autre extrémité de l'organe coulissant et, en outre, l'organe coulissant (17) mobile longitudinalement règle le débit principal de fluide par un rétrécissement (13).

8. Amortisseur selon la revendication 7, caractérisé en ce que ledit effet provoque une réduction de la première pression, donnant une augmentation importante du passage (13) du courant principal de fluide par l'organe coulissant mobile longitudinalement.

9. Amortisseur selon la revendication 7 ou 8, caractérisé en ce que, lorsque l'accélération cesse, l'armature/pointeau revient dans la position réglée par la fonction de régulation si bien que la première pression (P4) est restaurée.

10. Amortisseur selon la revendication 1, caractérisé en ce que l'organe (37) est raccordé à un corps (38, 39) monté afin qu'il puisse se déplacer longitudinalement dans le piston (28) et par rapport à celui-ci ou comporte un tel corps, l'organe ayant une position initiale affectée par un ou plusieurs organes de rappel, par exemple sous forme d'un ou plusieurs ressorts (42, 43).

Fig.1

EP 0 426 725 B1

Fig. 2a

Fig. 2b

Fig. 3

10

Fig. 4